# EUROPEAN PATENT APPLICATION

(11) **EP 4 333 489 A1**
(43) Date of publication of application: **06.03.2024**
(21) Application number: 21941065.1
(22) Date of filing: 08.05.2021
(51) Int. Cl.: H04W 24/10, H04W 74/08

(54) **SDT FAILURE REPORTING METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN)
(74) Representative: Kraus & Lederer PartGmbB
(86) International application number: PCT/CN2021/092425
(87) International publication number: WO 2022/236484

(57) **Abstract**

The embodiments of the present disclosure provide a SDT failure reporting method, a terminal device, and a network device. The method includes: determining whether a Small Data Transmission (SDT) failure occurs; and reporting SDT failure information when the SDT failure occurs. With the above technical solutions, by determining whether SDT failure occurs and reporting SDT failure information when the SDT failure occurs, the network device can know the SDT transmission result, which facilitates the network device's transmission scheduling for SDT and improves the transmission reliability of SDT.

## Description

### TECHNICAL FIELD

The embodiments of the present disclosure relate to communication technology, and more particularly, to an SDT failure reporting method, a terminal device, and a network device.

### BACKGROUND

In the 5-Generation (5G) mobile communication technology New Radio (NR) system, there are three types of Radio Resource Control (RRC) states: RRC idle state (RRC_IDLE), RRC inactive state (RRC_INACTIVE), and RRC connected state (RRC_CONNECTED). The RRC_INACTIVE state is a new state introduced by the 5G system from the perspective of energy saving. For a User Equipment (UE) in the RRC_INACTIVE state, radio bearers and all radio resources will be released, but a UE access context is maintained at both the UE and the base station, so as to quickly resume the RRC connection. The network generally keeps the UE with infrequent data transmission in the RRC_INACTIVE state. Before Rel-16, a UE in the RRC_INACTIVE state does not support data transmission. When uplink (MO) or downlink (MT) data arrives, the UE needs to resume the connection and be released into the INACTIVE state after the data transmission is completed. For a UE with a small amount of data and low transmission frequency, such a transmission mechanism will cause unnecessary power consumption and signaling overhead.

In Rel-17, Small Data Transmission (SDT) in RRC_INACTIVE can be achieved using a random access procedure and pre-configured resources (such as CG type1), i.e., uplink small data transmission based on a random access procedure (two-step/four-step) and uplink small data transmission based on pre-configured resources (such as CG typel). However, other related solutions for SDT still need to be further improved.

### SUMMARY

The embodiments of the present disclosure provide an SDT failure reporting method, a terminal device, and a network device, capable of improving related solutions for SDT failure, and improving the reliability of data transmission.

In a first aspect, the present disclosure provides an SDT failure reporting method. The method includes: determining whether a Small Data Transmission (SDT) failure occurs; and reporting SDT failure information when the SDT failure occurs.

In a second aspect, the present disclosure provides an SDT failure reporting method. The method includes: receiving Small Data Transmission (SDT) failure information reported by a terminal device.

In a third aspect, a terminal device is provided. The terminal device is configured to perform the method according to the above first aspect or any implementation thereof. In particular, the terminal device includes one or more functional modules configured to perform the method according to the above first aspect or any implementation thereof.

In an implementation, the terminal device may include a processing unit configured to perform functions related to information processing. For example, the processing unit may be a processor.

In an implementation, the terminal device may include a transmitting unit and/or a receiving unit. The transmitting unit is configured to perform transmitting related functions, and the receiving unit is configured to perform receiving related functions. For example, the transmitting unit may be a transmitter or transmitting device, and the receiving unit may be a receiver or receiving device. In another example, the terminal device may be a communication chip, the transmitting unit may be an input circuit or interface of the communication chip, and the transmitting unit may be an output circuit or interface of the communication chip.

In a fourth aspect, a network device is provided. The network device is configured to perform the method according to the above second aspect or any implementation thereof. In particular, the network device includes one or more functional modules configured to perform the method according to the above second aspect or any implementation thereof.

In an implementation, the network device may include a processing unit configured to perform functions related to information processing. For example, the processing unit may be a processor.

In an implementation, the network device may include a transmitting unit and/or a receiving unit. The transmitting unit is configured to perform transmitting related functions, and the receiving unit is configured to perform receiving related functions. For example, the transmitting unit may be a transmitter or transmitting device, and the receiving unit may be a receiver or receiving device. In another example, the network device may be a communication chip, the transmitting unit may be an input circuit or interface of the communication chip, and the transmitting unit may be an output circuit or interface of the communication chip.

In a fifth aspect, a terminal device is provided. The receiving device includes a processor and a memory. The memory has a computer program stored thereon, and the processor is configured to invoke and execute the computer program stored in the memory to perform the method according to the above first aspect or any implementation thereof.

In an implementation, one or more processors, and one or more memories are provided.

In an implementation, the memory may be integrated with the processor, or the memory may be separated from the processor.

In an implementation, the terminal device may further include a transmitter (transmitting device) and a receiver (receiving device).

In a sixth aspect, a network device is provided. The network device includes a processor and a memory. The memory has a computer program stored thereon, and the processor is configured to invoke and execute the computer program stored in the memory to perform the method according to the above second aspect or any implementation thereof.

In an implementation, one or more processors, and one or more memories are provided.

In an implementation, the memory may be integrated with the processor, or the memory may be separated from the processor.

In an implementation, the network device may further include a transmitter (transmitting device) and a receiver (receiving device).

In a seventh aspect, a chip is provided. The chip is configured to perform the method according to any of the above first and second aspects or any implementation thereof. In particular, the chip includes a processor configured to invoke and execute a computer program from a memory, to cause a device installed with the chip to perform the method according to any of the above first and second aspects or any implementation thereof.

In an eighth aspect, a computer-readable storage medium is provided. The computer-readable storage medium stores a computer program that causes a computer to perform the method according to any of the above first and second aspects or any implementation thereof.

In a ninth aspect, a computer program product is provided. The computer program product includes computer program instructions that cause a computer to perform the method according to any of the above first and second aspects or any implementation thereof.

In a tenth aspect, a computer program is provided. The computer program, when executed on a computer, causes the computer to perform the method according to any of the above first and second aspects or any implementation thereof.

With the above technical solutions, by determining whether SDT failure occurs and reporting SDT failure information when the SDT failure occurs, the network device can know the SDT transmission result, which facilitates the network device's transmission scheduling for SDT and improves the transmission reliability of SDT.

### BRIEF DESCRIPTION OF DRAWINGS

FIG. 1 shows an example of a communication system according to an embodiment of the present disclosure.
FIG. 2 is a schematic diagram showing an air interface process for uplink EDT according to embodiment of the present disclosure.
FIG. 3 is a schematic diagram showing an air interface process for PUR transmission according to embodiment of the present disclosure.
FIG. 4 is a schematic flowchart illustrating an SDT failure reporting method according to an embodiment of the present disclosure.
FIG. 5 is a schematic block diagram of a terminal device according to an embodiment of the present disclosure.
FIG. 6 is a schematic block diagram of a network device according to an embodiment of the present disclosure.
FIG. 7 is a schematic block diagram of a communication device according to an embodiment of the present disclosure.
FIG. 8 is a schematic block diagram of a chip according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

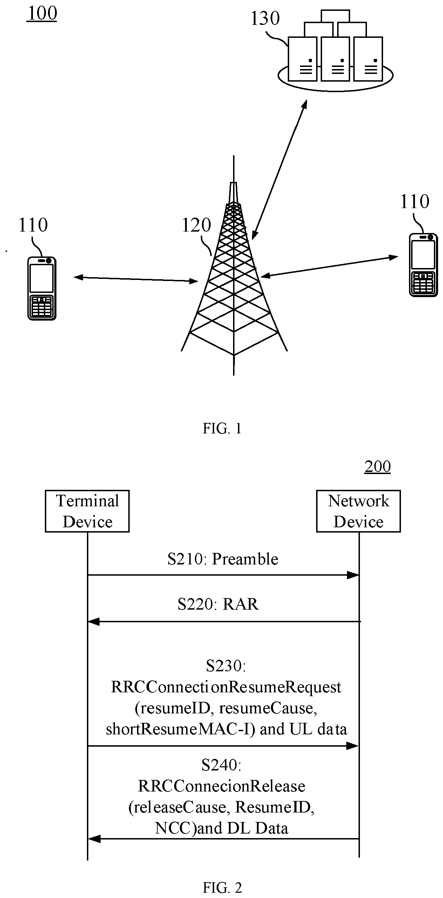

FIG. 1 is a schematic diagram showing a communication system according to an embodiment of the present disclosure.

As shown in FIG. 1, a communication system 100 may include terminal devices 110 and a network device 120. The network device 120 may communicate with the terminal devices 110 via an air interface. Multi-service transmissions are supported between the terminal devices 110 and the network device 120.

It can be appreciated that the embodiments of the present disclosure are described with reference to the communication system 100 for illustration only, but the embodiments of the present disclosure are not limited thereto. That is, the technical solutions according to the embodiments of the present disclosure can be applied to various communication systems, including for example: Long Term Evolution (LTE) system, LTE Time Division Duplex (TDD) system, Universal Mobile Telecommunication System (UMTS), Internet of Things (IoT) system, Narrow Band Internet of Things (NB-IoT) system, enhanced Machine-Type Communications (eMTC) system, the 5^{th} Generation (5G, also referred to as NR) communication system, or any future communication system.

In the communication system 100 as shown in FIG. 1, the network device 120 may be an access network device that can communicate with the terminal devices 110. The access network device may provide communication coverage for a particular geographic area, and may communicate with the terminal devices 110 (e.g., UEs) located in the coverage area.

The network device 120 may be an Evolutional Node (eNB or eNodeB) in an LTE system, a Next Generation Radio Access Network (NG RAN) device, a base station such as a gNB in an NR system, or a radio controller in a Cloud Radio Access Network (CRAN). Alternatively, the network device 120 may be a relay station, an access point, a vehicle-mounted device, a wearable device, a hub, a switch, a network bridge, a router, or a network device in a future evolved Public Land Mobile Network (PLMN).

Each of the terminal devices 110 may be any terminal device, including but not limited to, a terminal device connected to the network device 120 or other terminal devices in a wired or wireless manner.

For example, the terminal device 110 may be an access terminal, a User Equipment (UE), a user unit, a user station, a mobile station, a mobile device, a remote station, a remote terminal, a mobile device, a user terminal, a terminal, a wireless communication device, a user agent, or a user device. Alternatively, the access terminal can be a cellular phone, a cordless phone, a Session Initiation Protocol (SIP) phone, an IoT device, a handheld satellite terminal, a Wireless Local Loop (WLL) station, a Personal Digital Assistant (PDA), a handheld device or a computing device having a wireless communication function, another processing device connected to a wireless modem, a vehicle-mounted device, a wearable device, a terminal device in a 5G network, or a terminal device in a future evolved network, etc.

The terminal devices 110 may be configured to perform direct communication, such as Device to Device (D2D) communication.

The wireless communication system 100 may also include a core network device 130 that communicates with a base station. The core network device 130 may be a 5G Core (5GC) device, for example, Access and Mobility Management Function (AMF), Authentication Server Function (AUSF), User Plane Function (UPF), or Session Management Function (SMF). Optionally, the core network device 130 may also be an Evolved Packet Core (EPC) device in an LTE network, e.g., a Session Management Function + Core Packet Gateway (SMF+PGW-C) device. It is to be noted that the SMF+PGW-C can provide the functions of both SMF and PGW-C. In the process of network evolution, the above core network devices may have different names, or new network entities may be formed by dividing the functions of the core network. The embodiment of the present is not limited to this.

Connections may be established between various functional units in the communication system 100 via Next Generation (NG) interfaces for communication.

For example, the terminal device can establish an air interface connection with the access network device via an NR interface to transmit user plane data and control plane signaling. The terminal device can establish a control plane signaling connection with the AMF via an NG interface 1 (N1). The access network device, such as a next generation radio access base station (gNB), can establish a user plane data connection with the UPF via an NG interface 3 (N3). The access network device can establish a control plane signaling connection with the AMF via an NG interface 2 (N2). The UPF can establish a control plane signaling connection with the SMF via an NG interface 4 (N4). The UPF can exchange user plane data with a data network via an NG interface 6 (N6). The AMF can establish a control plane signaling connection with the SMF via an NG interface 11 (N11). The SMF can establish a control plane signaling connection with the PCF via an NG interface 7 (N7).

FIG. 1 exemplarily shows one base station, one core network device, and two terminal devices. Optionally, the communication system 100 may include a plurality of base station devices and the coverage of each base station may include a different number of terminal devices. The embodiment of the present disclosure is not limited to this.

It can be appreciated that, in the embodiment of the present disclosure, a device with a communication function in a network/system may be referred to as a communication device. For the communication system 100 shown in FIG. 1 as an example, communication devices may include the network device 120 and the terminal devices 110, each having a communication function. The network device 120 and the terminal devices 110 may be e.g., any of the devices described above, and details thereof will be omitted here. The communication device may also include other devices in the communication system 100, such as a network controller, a mobility management entity, and other network entities, and the embodiment of the present disclosure is not limited to this.

It is to be noted that the terms "system" and "network" are often used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

In the 5-Generation (5G) New Radio (NR) system, there are three types of Radio Resource Control (RRC) states: RRC_IDLE state, RRC _INACTIVE state, and RRC_CONNECTED state.

In the RRC_IDLE state, mobility is UE-based cell selection and reselection, paging is initiated by a Core Network (CN), and the paging area is configured by the CN. There is no UE Access Stratum (AS) context at the base station, and there is no RRC connection.

In the RRC_CONNECTED state, there is an RRC connection, and the base station and the UE have the UE AS context. The network device knows the location of the UE at the specific cell level. Mobility is controlled by the network device. Unicast data can be transmitted between the UE and the base station.

In the RRC_INACTIVE state, mobility is UE-based cell selection and reselection, there is a connection between CN-NR, there is UE AS context on a certain base station, paging is triggered by a Radio Access Network (RAN), and RAN-based paging area is managed by the RAN, and the network device knows the location of the UE at the RAN-based paging area level.

It should be noted that a UE in the RRC_CONNECTED state can enter the RRC_IDLE state by releasing the RRC connection. A UE in the RRC_IDLE state can enter the RRC_CONNECTED state by establishing an RRC connection. A UE in the RRC_CONNECTED state can enter the RRC_INACTIVE state by releasing (Release with Suspend) an RRC connection. A UE in the RRC_INACTIVE state can enter the RRC_CONNECTED state by resuming an RRC connection, or enter the RRC_IDLE state by releasing an RRC connection. In other words, the terminal device can switch between the above states, and the present disclosure is not limited to this.

For a User Equipment (UE) in the RRC_INACTIVE state, radio bearers and all radio resources will be released, but a UE access context is maintained at both the UE and the base station, so as to quickly resume the RRC connection. The network generally keeps the UE with infrequent data transmission in the RRC_INACTIVE state. Before Rel-16, a UE in the RRC _INACTIVE state does not support data transmission. When uplink (MO) or downlink (MT) data arrives, the UE needs to resume the connection and be released into the INACTIVE state after the data transmission is completed. For a UE with a small amount of data and low transmission frequency, such a transmission mechanism will cause unnecessary power consumption and signaling overhead.

In Rel-17, Small Data Transmission (SDT) in RRC_INACTIVE can be achieved using a random access procedure and pre-configured resources (such as CG type1), i.e., uplink small data transmission based on a random access procedure (two-step/four-step) and uplink small data transmission based on pre-configured resources (such as CG type1).

For uplink small data transmission based on the random access procedure (two-step/four-step), in LTE, Early Data Transmission (EDT), i.e., small data transmission, has been introduced. In this process, the UE may transmit uplink small data packets and/or downlink small data packets, while always keeping in the idle state or suspended state or deactivate (inactive) state.

FIG. 2 is a schematic diagram showing an air interface process 200 for uplink EDT according to an embodiment of the present disclosure.

As shown in FIG. 2, the process 200 may include the following.

At S210, a terminal device transmits a preamble to a network device.

The terminal device transmits Msg 1 to the base station to inform the network device that the terminal device has initiated a random access request. The Msg 1 carries a Random Access Preamble (RAP), which is also referred to as random access preamble sequence, preamble sequence, preamble, etc. Further, the Msg 1 can also be used by the network device to estimate a transmission delay between the network device and the terminal device, so as to calibrate the uplink time. Specifically, the terminal device selects a preamble index and a PRACH resource for transmitting the preamble, and then transmits the preamble on a PRACH. Here, the network device will notify all terminal devices the time-frequency resources on which the preamble is allowed to be transmitted, by broadcasting a System Information Block (SIB), e.g., SIB2.

At S220, the terminal device receives a Random Access Response (RAR) transmitted by the network device.

After receiving the Msg 1 transmitted by the terminal device, the network device transmits Msg 2, that is, a Random Access Response (RAR) message to the terminal device. The Msg 2 may carry, for example, a Time Advance (TA), an uplink grant instruction such as configuration of uplink resources, and a Temporary Cell-Radio Network Temporary Identity (TC-RNTI), etc. The terminal device monitors a Physical Downlink Control Channel (PDCCH) within a random access response time window (RAR window), so as to receive the RAR message returned by the network device. The RAR message may be descrambled using a corresponding Random Access Radio Network Temporary Identity (RA-RNTI). If the terminal device does not receive the RAR message returned by the network device within the RAR time window, it considers that the random access procedure has failed. If the terminal device successfully receives a RAR message, and the preamble index carried in the RAR message is the same as the index of the preamble transmitted by the terminal device in Msg 1, it considers that the RAR has been successfully received. In this case, the terminal device can stop monitoring in the RAR time window.

Here, the Msg 2 may include RAR messages for multiple terminal devices, and the RAR message for each terminal device may include a RAP Identity (RAPID) used by the terminal device, information on a resource for transmitting a Msg 3, TA adjustment information, TC-RNTI, etc.

At S230, the terminal device transmits an RRC connection resume request (RRCConnectionResumeRequest) and uplink data to the network device. Here, the RRC connection resume request includes, but not limited to: a resume ID (resumeID), a resume cause (resumeCause), and a short resume MAC-I (shortResumeMAC-I).

At S240, the terminal device receives an RRC release message and downlink data transmitted by the network device. Here, the RRC release message includes, but not limited to: a release cause (releaseCause), a resume ID (resumeID) and a Network (PLMN) Color Code (NCC). The RRC release message carries an NCC for encryption and integrity protection of MSG4, that is, the key generated based on the NCC is used for encryption and integrity protection of MSG4. The MAC-I is used for authentication. The RRC release message may also be referred to as an RRC connection release (RRCConnecionRelease) message.

For the EDT process, in fact, the UE completes the transmission of small data packets (that is, the uplink data in S230 and the downlink data in S240) without entering the connected state. In terms of configuration, the network will configure a maximum Transmission Block size (TB size) allowable to be transmitted in the current network on SIB2. The UE determines the amount of data to be transmitted. If it is smaller than the broadcasted maximum transmission block size, the UE can initiate an EDT transmission; or otherwise the UE uses a normal connection establishment process and enters the connected state to transmit data.

For uplink small data transmission based on pre-configured resources (such as CG type1), in LTE Release 16, for Narrow Band Internet of Things (NB-IoT) and enhanced Machine-Type Communications (eMTC) scenarios, a method of data transmission using a Preconfigured Uplink Resource (PUR) in the IDLE state is introduced. The PUR is only valid in the currently configured cell. That is, when the UE detects a cell change and initiates random access in the new cell, the UE needs to release the PUR configured in the old cell. The PUR transmission process is similar to LTE UP-EDT, but the process of transmitting a preamble to obtain a TA and an uplink grant (UL grant) is omitted.

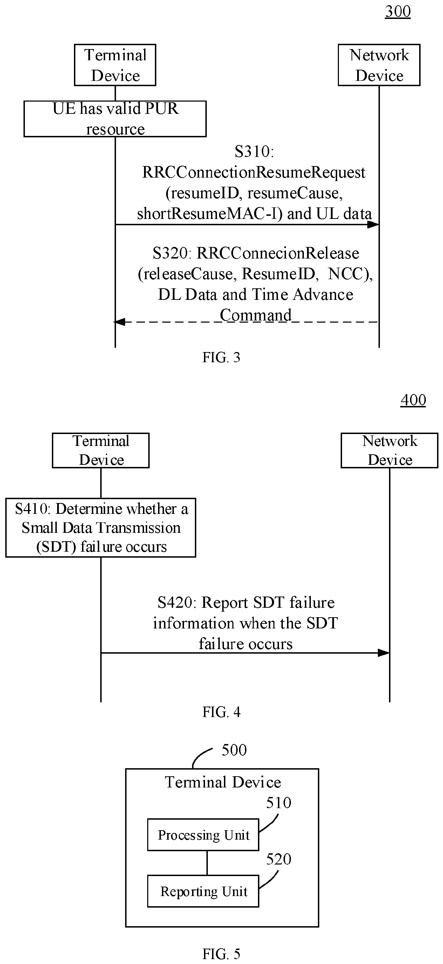

FIG. 3 is a schematic diagram showing an air interface process 300 for PUR transmission according to an embodiment of the present disclosure.

As shown in FIG. 3, the process 300 may include the following.

At S310, a terminal device transmits an RRC connection resume request (RRCConnectionResumeRequest) and uplink data to a network device. Here, the RRC connection resume request includes, but not limited to: a resume ID (resumeID), an establishment cause, and a short resume MAC-I (shortResumeMAC-I).

At S320, the terminal device receives an RRC release message, downlink data and a Time Advance Command transmitted by the network device. Here, the RRC release message includes, but not limited to: a release cause (releaseCause), a resume ID (resumeID) and a Network (PLMN) Color Code (NCC). The RRC release message carries NCC for encryption and integrity protection of MSG4, that is, the key generated based on the NCC is used for encryption and integrity protection of MSG4. MAC-I is used for authentication. The RRC release message may also be referred to as an RRC connection release (RRCConnecionRelease) message.

An important prerequisite for the UE to perform data transmission using PUR is to have a valid TA. In an implementation, the condition for determining whether a TA is valid may include at least one of:
a Time Alignment Timer (TAT) is running; and/or
a RSRP change (increase or decrease) is not greater/smaller than a defined threshold.

Here, the TAT configuration is transmitted to the UE via a RRCConnectionRelease message as part of the PUR configuration. According to the configuration of the TAT, the RRC instructs the MAC layer or the bottom layer to release the corresponding configuration. After receiving the RRCConnectionRelease message, the RRC determines whether pur-Config is included. If it is not included, the UE keeps the current configuration unchanged and the TAT is not restarted. If it is included, the RRC performs one of the following actions according to the PUR configuration (pur-Config):
If the PUR configuration is set to setup, the UE stores or replaces the original PUR configuration. If the PUR configuration contains a PUR time alignment timer (pur-TimeAlignmentTimer), the RRC layer indicates pur-TimeAlignmentTimer to the lower layer. If the PUR configuration does not contain pur-TimeAlignmentTimer, the RRC layer instructs the lower layer to release pur-TimeAlignmentTimer.
If the PUR configuration is set to release, the UE releases the PUR configuration and instructs the lower layer to release pur-TimeAlignmentTimer.
If the network does not give an explicit indication, and the UE currently has pre-configured resources, the default behavior of the UE after receiving the RRCConnectionRelease message is to maintain the current configuration.

The TAT in the PUR transmission is maintained by the MAC layer. If the MAC layer receives pur-TimeAlignmentTimer configured by the higher layer, it will start or restart the TAT. If the MAC layer receives an instruction to release pur-TimeAlignmentTimer from the higher layer, it will stop the TAT. In addition to starting or restarting the TAT according to the instruction of the higher layer, the MAC also needs to start or restart the TAT according to a received TAC MAC CE or a time adjustment value indicated by the PDCCH.

FIG. 4 shows a schematic flowchart illustrating an SDT failure reporting method 400 according to an embodiment of the present disclosure. The method 400 can be interactively performed by a terminal device and a network device. The terminal device shown in FIG. 4 may be the terminal device shown in FIG. 1, and the network device shown in FIG. 4 may be the access network device shown in FIG. 1.

As shown in FIG. 4, the method 400 may include:
at S410, determining whether a Small Data Transmission (SDT) failure occurs; and
at S420, reporting SDT failure information when the SDT failure occurs.

In short, the terminal device reports the SDT failure information when it determines that the SDT failure occurs. After receiving the SDT failure information, the network device may perform transmission scheduling for SDT based on the SDT failure information.

With the above technical solutions, by determining whether SDT failure occurs and reporting SDT failure information when the SDT failure occurs, the network device can know the SDT transmission result, which facilitates the network device's transmission scheduling for SDT and improves the transmission reliability of SDT.

In some embodiments, S410 may include:
determining the SDT failure when an SDT failure condition is satisfied.

In some implementations, the SDT failure condition may include at least one of:
expiry of a first timer that is started when an SDT process starts and/or is triggered;
Random Access (RA) failure;
Configured Grant (CG) resource being unavailable;
Radio Link Control (RLC) failure;
Radio Link Failure (RLF);
cell reselection; or
Radio Resource Control Reject (RRCReject) or Radio Resource Control Setup (RRCSetup) message being received.

For example, the first timer is started when the SDT process is started/triggered, and when the first timer expires, it is considered that the SDT process fails, that is, the terminal device reports the SDT failure information to the network device. In another example, if the Random Access Small Data Transmission (RA-SDT) resource is used to transmit data (or after the RA-SDT process is triggered), when the random access procedure fails, that is, the maximum number of retransmissions of the random access MSG1/MSGA is exceeded, the SDT is considered to have failed. In an implementation, the indication of the failure of the random access procedure may be from MCG MAC (upon random access problem indication from MCG MAC). In another example, if the SDT process is a CG-SDT/RA-SDT process, that is, when the SDT uses the CG-SDT/RA-SDT resource for transmission, when the Radio Link Control (RLC) retransmission reaches the maximum number of retransmissions, the SDT is considered to have failed. In one implementation, indication information from the MCG RLC may indicate that the maximum number of retransmissions has been reached (upon indication from MCG RLC that the maximum number of retransmissions has been reached). In another example, in the SDT process, if a Radio Link Failure (RLF) occurs, the SDT process is considered to have failed. In one implementation, radio link recovery can be performed after the RLF occurs. If the radio link recovery fails, it is considered that the SDT process has failed. In another implementation, radio link recovery can be performed after the RLF occurs, and beam recovery can be performed before the radio link recovery. If the beam recovery fails, it is considered that the SDT process fails. Alternatively, if the beam recovery fails, the radio link recovery can be performed, and if the radio link recovery fails, the SDT process is considered to have failed. In another example, if the terminal device detects that no CG resource is available while performing the SDT, including no available CG resources in the current beam and/or carrier, it considers that the SDT fails. In another example, if a cell reselection occurs while the terminal device is performing the SDT, it is considered that the SDT fails. In another example, when the terminal device receives an RRC reject (RRCReject) message or an RRC setup (RRCSetup) message transmitted by the network while performing the SDT, it considers that the SDT fails. Certainly, one or more of these solutions may be used in combination, and the embodiment of the present disclosure is not limited to this.

For beam recovery, the following 4 steps can be included.

### Step 0:

The terminal keeps maintaining a backup beam pair, and if a beam failure occurs, it will notify the base station of the index of the beam. This step is independent of the other three steps below.

### Step 1:

The terminal monitors quality of a control channel, and if it is continuously lower than a certain threshold (hypothetical BLER>0.1) for a certain period of time, it is considered that a beam failure has occurred.

### Step 2:

The terminal notifies the base station of the beam failure via a PRACH, and notifies the base station of the index of the backup beam maintained in Step 0 via the PRACH, then switches the beam of the terminal to the backup beam, and waits for the base station to respond. For example, the terminal may notify the base station of the index of the backup beam maintained in Step 0 via a beam recovery request (Beam failure recovery request).

### Step 3:

After receiving the beam recovery request, the base station switches its own beam to the backup beam notified by the terminal, and transmits a response, that is, a beam recovery response (Beam failure recovery response), on the backup beam. If the terminal receives the beam recovery response, it means that the recovery of the beam failure is completed, or otherwise, it will enter link recovery.

In some embodiments, the SDT failure information may include at least one of: an SDT failure type; or a failure cause.

In other words, the SDT failure information may include the SDT failure type and/or the failure cause.

In some implementations, the SDT failure type may include at least one of:
SDT failure;
Configured Grant Small Data Transmission (CG-SDT) failure; or
Random Access Small Data Transmission (RA-SDT) failure.

It should be noted that the CG-SDT can be understood as a process of using a CG resource to perform SDT, and the RA-SDT can be understood as a process of using an RA resource to perform SDT. In other words, the SDT failure type can be understood as a type of failed SDT. Of course, in other alternative embodiments, the CG-SDT, the RA-SDT, and even the SDT failure type may also be defined or explained from other perspectives, and the embodiment of the present disclosure is not limited to this.

In some implementations, the failure cause may include at least one of:
expiry of a first timer that is started when an SDT process starts and/or is triggered;
Random Access (RA) failure;
Configured Grant (CG) resource being unavailable;
Radio Link Control (RLC) failure;
beam recovery failure;
cell reselection; or
Radio Resource Control Reject (RRCReject) or Radio Resource Control Setup (RRCSetup) message being received.

It should be noted that the failure cause(s) involved in the embodiment of the present disclosure may be the same as the SDT failure condition(s) described above. That is, when the terminal device determines the SDT failure based on a certain SDT failure condition, the corresponding SDT failure condition may be determined as the failure cause. Of course, the failure cause involved in the embodiment of the present disclosure may be different from the SDT failure condition described above, and the embodiment of the present disclosure is not limited to this. For example, the failure cause may be a specific concept of the failure condition. As an example, the failure condition may be Radio Link Failure (RLF), and the failure cause may be beam recovery failure.

In some embodiments, S420 may include:
reporting the SDT failure information via an RLF report (rlfreport); or
reporting the SDT failure information via dedicated information.

It should be noted that the dedicated information may refer to an Information Element (IE) dedicated (solely) for carrying failure information (FailureInformation). Certainly, the dedicated information may be dedicated information for the SDT failure information, or information dedicated for carrying any failure information, and the embodiment of the present disclosure is not limited to this.

In some embodiments, S420 may include:
reporting the SDT failure information to a first serving cell, the first serving cell including at least one of: a cell accessed using a non-SDT random access procedure, a cell successfully accessed using an RRC connection reestablishment process, or a cell successfully accessed when a terminal device re-enters an RRC connected state.

In other words, the first serving cell may receive the SDT failure information reported by the terminal device.

In some implementations, the method 400 may further include:
storing the SDT failure information.

In other words, before reporting the SDT failure information, the terminal device may store the SDT failure information, and after successfully accessing the first serving cell, the terminal device may report the SDT failure information to the first serving cell.

In some implementations, the first serving cell may be a first cell configured with an SDT resource and having an SDT failure occurring therein; or the first serving cell may be a second cell other than the first cell.

In other words, the first cell or the second cell may receive the SDT failure information reported by the terminal device. Further, when the first serving cell is the second cell, the second cell is further configured to forward the received SDT failure information to the first cell.

In some implementations, the SDT failure information may further include an identity of the first cell. Optionally, the identity of the first cell may be a Physical-layer Cell Identity (PCI) and/or a Cell Global Identity (CGI) of the first cell.

In some embodiments, the method 400 may further include:
reporting first indication information indicating that there is SDT failure information to be reported.

In other words, the network device may receive the first indication information reported by the terminal device. Optionally, the first indication information may be carried in an RRC message, for example, an RRC connection establishment request, an RRC reestablishment request or an RRCresume request.

In some embodiments, the method 400 may further include:
receiving second indication information instructing a terminal device to report or not to report the SDT failure information.

In other words, the network device may transmit the second indication information to the terminal device. For example, after receiving the first indication information transmitted by the terminal device, the network device may transmit the first indication information to the terminal device to indicate whether the terminal device is to report the SDT failure information to be reported.

In some embodiments, the method 400 may further include:
receiving uplink data from a higher layer; and
transmitting the uplink data over a random access resource and/or a Configured Grant (CG) resource.

In some implementations, when it is determined to transmit the uplink data over the CG resource, at least one of the following conditions may be satisfied:
a data amount of the uplink data being smaller than or equal to an SDT threshold;
a change amount of signal quality of a serving cell being smaller than or equal to a quality threshold;
a CG resource being available on a selected carrier;
a CG resource being available on a selected beam; or
a Timing Advance (TA) timer being running.

It should be noted that the signal quality of the serving cell may include, but not limited to: Reference Signal Receiving Power (RSRP) and/or Reference Signal Receiving Quality (RSRQ).

The solutions of the present disclosure will be described below in conjunction with specific embodiments.

### Embodiment 1:

When uplink data arrives at the higher layer, the terminal device triggers the SDT process. Specifically, it selects a corresponding SDT type (CG-SDT/RA-SDT) and a corresponding resource based on an SDT selection criterion for uplink data transmission. At the same time, the terminal device starts a first timer, which is configured by the network via an RRC release message when the terminal device enters an inactive state.

If the UE chooses to use a CG resource for SDT, for example, at least one of the following is satisfied:
a data amount of the uplink data being smaller than or equal to an SDT threshold;
a change amount of signal quality of a serving cell being smaller than or equal to a quality threshold;
a CG resource being available on a selected carrier;
a CG resource being available on a selected beam; or
a Timing Advance (TA) timer being running.

If during the SDT process, the higher layer receives indication information indicating that the number of retransmissions of a certain data packet exceeds the maximum number of retransmissions at RLC, and the SDT process is considered to have failed. Based on this, the terminal will perform the failure information reporting process, that is, to report the SDT failure information. Specifically, the terminal can set the failure type as SDT failure; and further, the terminal can also report the failure cause, for example, the maximum number of retransmissions at RLC is exceeded.

The schemes for the terminal to report the SDT failure information may include, but not limited to, the following three schemes:
Scheme 1: The terminal stores the SDT failure information, initiates Non-Small Data Transmission (NON-SDT) random access, and reports the SDT failure information to the successfully accessed serving cell after successful access.
Scheme 2: The terminal stores the SDT failure information, initiates connection reestablishment, and reports the SDT failure information to the successfully accessed serving cell after successful reestablishment and access.
Scheme 3: The terminal returns to the idle state, stores the SDT failure information, and reports the SDT failure information to the successfully accessed serving cell when entering the connected state next time.

In this embodiment, the serving cell may be a first cell configured with an SDT resource and having an SDT failure occurring therein, or may be a new second cell. If the cell successfully accessed by the terminal is the second cell, the second cell may forward the received information to the first cell for subsequent optimization. Optionally, the failure information report may include an ID of the first cell, such as PCI and/or CGI. In addition, before the terminal reports the SDT failure information, it can decide whether to report based on the needs of the network, e.g., by notifying the network that there is currently failure information/failure report to be reported via 1-bit indication information; and then determining whether to report based on the network configuration. Optionally, the indication information may be carried in an RRC message; for example, an RRC connection establishment request, an RRC reestablishment request, or an RRCresume request.

### Embodiment 2:

When uplink data arrives at the higher layer, the terminal device triggers the SDT process. Specifically, it selects a corresponding SDT type (CG-SDT/RA-SDT) and a corresponding resource based on an SDT selection criterion for uplink data transmission. At the same time, the terminal device starts a first timer, which is configured by the network via an RRC release message when the terminal device enters an inactive state.

If the first timer expires during the SDT process, it is considered that the SDT process fails. Based on this, the terminal will perform the failure information reporting process, that is, to report the SDT failure information. Specifically, the terminal can set the failure type as SDT failure; and further, the terminal can also report the failure cause, for example, the maximum number of retransmissions at RLC is exceeded.

The schemes for the terminal to report the SDT failure information may include, but not limited to, the following three schemes:
Scheme 1: The terminal stores the SDT failure information, initiates Non-Small Data Transmission (NON-SDT) random access, and reports the SDT failure information to the successfully accessed serving cell after successful access.
Scheme 2: The terminal stores the SDT failure information, initiates connection reestablishment, and reports the SDT failure information to the successfully accessed serving cell after successful reestablishment and access.
Scheme 3: The terminal returns to the idle state, stores the SDT failure information, and reports the SDT failure information to the successfully accessed serving cell when entering the connected state next time.

In this embodiment, the serving cell may be a first cell configured with an SDT resource and having an SDT failure occurring therein, or may be a new second cell. If the cell successfully accessed by the terminal is the second cell, the second cell may forward the received information to the first cell for subsequent optimization. Optionally, the failure information report may include an ID of the first cell, such as PCI and/or CGI. In addition, before the terminal reports the SDT failure information, it can decide whether to report based on the needs of the network, e.g., by notifying the network that there is currently failure information/failure report to be reported via 1-bit indication information; and then determining whether to report based on the network configuration. Optionally, the indication information may be carried in an RRC message; for example, an RRC connection establishment request, an RRC reestablishment request, or an RRCresume request.

### Embodiment 3:

When uplink data arrives at the higher layer, the terminal device triggers the SDT process. Specifically, it selects a corresponding SDT type (CG-SDT/RA-SDT) and a corresponding resource based on an SDT selection criterion for uplink data transmission. At the same time, the terminal device starts a first timer, which is configured by the network via an RRC release message when the terminal device enters an inactive state.

If the UE chooses to use a CG resource for SDT, for example, at least one of the following is satisfied:
a data amount of the uplink data being smaller than or equal to an SDT threshold;
a change amount of signal quality of a serving cell being smaller than or equal to a quality threshold;
a CG resource being available on a selected carrier;
a CG resource being available on a selected beam; or
a Timing Advance (TA) timer being running.

If the TA timer expires and/or a change amount of the RSRP exceeds a pre-configured threshold during the SDT process, that is, the current TA is unavailable, the UE releases the CG resource and considers the SDT process to have failed. Based on this, the terminal will perform the failure information reporting process, that is, to report the SDT failure information. Specifically, the terminal can set the failure type as SDT failure; and further, the terminal can also report the failure cause, for example, the maximum number of retransmissions at RLC is exceeded.

The schemes for the terminal to report the SDT failure information may include, but not limited to, the following three schemes:
Scheme 1: The terminal stores the SDT failure information, initiates Non-Small Data Transmission (NON-SDT) random access, and reports the SDT failure information to the successfully accessed serving cell after successful access.
Scheme 2: The terminal stores the SDT failure information, initiates connection reestablishment, and reports the SDT failure information to the successfully accessed serving cell after successful reestablishment and access.
Scheme 3: The terminal returns to the idle state, stores the SDT failure information, and reports the SDT failure information to the successfully accessed serving cell when entering the connected state next time.

In this embodiment, the serving cell may be a first cell configured with an SDT resource and having an SDT failure occurring therein, or may be a new second cell. If the cell successfully accessed by the terminal is the second cell, the second cell may forward the received information to the first cell for subsequent optimization. Optionally, the failure information report may include an ID of the first cell, such as PCI and/or CGI. In addition, before the terminal reports the SDT failure information, it can decide whether to report based on the needs of the network, e.g., by notifying the network that there is currently failure information/failure report to be reported via 1-bit indication information; and then determining whether to report based on the network configuration. Optionally, the indication information may be carried in an RRC message; for example, an RRC connection establishment request, an RRC reestablishment request, or an RRCresume request.

The preferred embodiments of the present disclosure have been described in detail above with reference to the accompanying drawings. However, the present disclosure is not limited to the specific details of the above embodiments. Various simple modifications can be made to the technical solutions of the present disclosure without departing from the scope of the technical concept of the present disclosure. These simple modifications all belong to the protection scope of the present disclosure. For example, the specific technical features described in the above specific embodiments can be combined as appropriate provided that they do not conflict. In order to avoid unnecessary repetition, the description of various possible combinations will be omitted here. In another example, the embodiments of the present disclosure can also be combined as appropriate, as long as they do not violate the concept of the present disclosure, and they should also be regarded as the content disclosed in the present disclosure.

It should also be understood that, in the method embodiments of the present disclosure, the values of the sequence numbers of the above processes do not mean the order of execution, and the execution order of each process should be determined by its functions and internal logics, and the implementation of the present disclosure is not limited to any specific order. In addition, in the embodiments of the present disclosure, the terms "downlink" and "uplink" are used to indicate the transmission direction of signals or data. Here, "downlink" is used to indicate that the transmission direction of signals or data is a first direction from a station to a user equipment of a cell, and "uplink" is used to indicate that the transmission direction of signals or data is a second direction from a user equipment in a cell to a station. For example, a "downlink signal" indicates that the transmission direction of the signal is the first direction. In addition, in this embodiment of the present disclosure, the term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

The method embodiments of the present disclosure have been described in detail above with reference to FIG. 1 to FIG. 4, and the device embodiments of the present disclosure will be described in detail below in conjunction with FIG. 5 to FIG. 8.

FIG. 5 is a schematic block diagram of a terminal device 500 according to an embodiment of the present disclosure.

As shown in FIG. 5, the terminal device 500 may include:
a processing unit 510 configured to determine whether a Small Data Transmission (SDT) failure occurs; and
a reporting unit 520 configured to report SDT failure information when the SDT failure occurs.

In some embodiments, the processing unit 510 may be configured to:
determine the SDT failure when an SDT failure condition is satisfied.

In some embodiments, the SDT failure condition may include at least one of:
expiry of a first timer that is started when an SDT process starts and/or is triggered;
Random Access (RA) failure;
Configured Grant (CG) resource being unavailable;
Radio Link Control (RLC) failure;
Radio Link Failure (RLF);
cell reselection; or
Radio Resource Control Reject (RRCReject) or Radio Resource Control Setup (RRCSetup) message being received.

In some embodiments, the SDT failure information may include at least one of:
an SDT failure type; or
a failure cause.

In some embodiments, the SDT failure type may include at least one of:
SDT failure;
Configured Grant Small Data Transmission (CG-SDT) failure; or
Random Access Small Data Transmission (RA-SDT) failure.

In some embodiments, the failure cause may include at least one of:
expiry of a first timer that is started when an SDT process starts and/or is triggered;
Random Access (RA) failure;
Configured Grant (CG) resource being unavailable;
Radio Link Control (RLC) failure;
beam recovery failure;
cell reselection; or
Radio Resource Control Reject (RRCReject) or Radio Resource Control Setup (RRCSetup) message being received.

In some embodiments, the reporting unit 520 may be configured to:
report the SDT failure information via an RLF report; or
report the SDT failure information via dedicated information.

In some embodiments, the reporting unit 520 may be configured to:
report the SDT failure information to a first serving cell, the first serving cell including at least one of: a cell accessed using a non-SDT random access procedure, a cell successfully accessed using an RRC connection reestablishment process, or a cell successfully accessed when a terminal device re-enters an RRC connected state.

In some embodiments, the reporting unit 520 may be further configured to:
store the SDT failure information.

In some embodiments, the first serving cell may be a first cell configured with an SDT resource and having an SDT failure occurring therein; or the first serving cell may be a second cell other than the first cell.

In some embodiments, the SDT failure information may further include an identity of the first cell.

In some embodiments, the reporting unit 520 may be further configured to:
report first indication information indicating that there is SDT failure information to be reported.

In some embodiments, the reporting unit 520 may be further configured to:
receive second indication information instructing a terminal device to report or not to report the SDT failure information.

In some embodiments, the reporting unit 520 may be further configured to:
receive uplink data from a higher layer; and
transmit the uplink data over a random access resource and/or a Configured Grant (CG) resource.

In some embodiments, when it is determined to transmit the uplink data over the CG resource, at least one of the following conditions may be satisfied:
a data amount of the uplink data being smaller than or equal to an SDT threshold;
a change amount of signal quality of a serving cell being smaller than or equal to a quality threshold;
a CG resource being available on a selected carrier;
a CG resource being available on a selected beam; or
a Timing Advance (TA) timer being running.

It should be understood that the device embodiments and the method embodiments may correspond to each other, and for similar descriptions, reference may be made to the method embodiments. Specifically, the terminal device 500 shown in FIG. 5 may correspond to the corresponding entity in the method 400 of the embodiment of the present disclosure, and the above and other operations and/or functions of the respective units in the terminal device 500 are provided for implementing the corresponding processes of the respective methods in FIG. 4, and for the sake of brevity, details thereof will be omitted here.

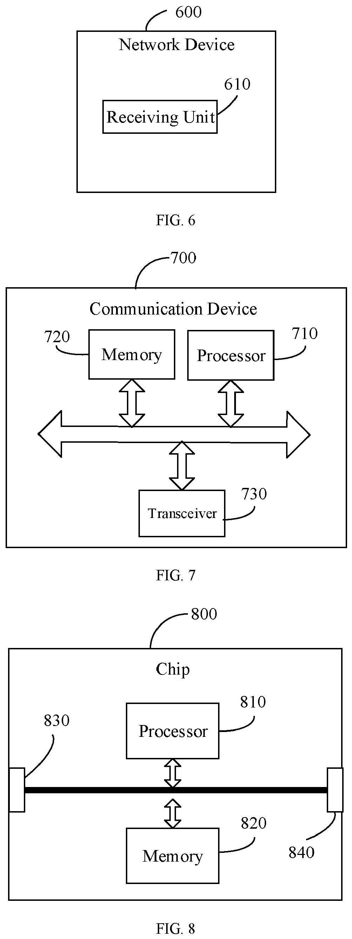

FIG. 6 is a schematic block diagram of a network device 600 according to an embodiment of the present disclosure.

As shown in FIG. 6, the network device 600 includes:
a receiving unit 610 configured to receive Small Data Transmission (SDT) failure information reported by a terminal device.

In some embodiments, the SDT failure information may include at least one of:
an SDT failure type; or
a failure cause.

In some embodiments, the SDT failure type may include at least one of:
SDT failure;
Configured Grant Small Data Transmission (CG-SDT) failure; or
Random Access Small Data Transmission (RA-SDT) failure.

In some embodiments, the failure cause may include at least one of:
expiry of a first timer that is started when an SDT process starts and/or is triggered;
Random Access (RA) failure;
Configured Grant (CG) resource being unavailable;
Radio Link Control (RLC) failure;
beam recovery failure;
cell reselection; or
Radio Resource Control Reject (RRCReject) or Radio Resource Control Setup (RRCSetup) message being received.

In some embodiments, the receiving unit 610 may be configured to:
receive the SDT failure information reported by the terminal device via an RLF report; or
receive the SDT failure information reported by the terminal device via dedicated information.

In some embodiments, a serving cell of the terminal device may be a first serving cell, the first serving cell including at least one of: a cell accessed using a non-SDT random access procedure, a cell successfully accessed using an RRC connection reestablishment process, or a cell successfully accessed when the terminal device re-enters an RRC connected state.

In some embodiments, the first serving cell may be a first cell configured with an SDT resource and having an SDT failure occurring therein; or the first serving cell may be a second cell other than the first cell.

In some embodiments, a serving cell of the terminal device is a second cell, and the receiving unit 610 may be further configured to:
forward the SDT failure information reported by the terminal device to the first cell.

In some embodiments, the SDT failure information may further include an identity of the first cell.

In some embodiments, the receiving unit 610 may be configured to
receive first indication information reported by the terminal device, the first indication information indicating that there is SDT failure information to be reported.

In some embodiments, the receiving unit 610 may be further configured to:
transmit second indication information to the terminal device, the second indication information instructing the terminal device to report or not to report the SDT failure information.

In some embodiments, the receiving unit 610 may be further configured to:
receive uplink data transmitted by the terminal device over a random access resource and/or a Configured Grant (CG) resource.

It should be understood that the device embodiments and the method embodiments may correspond to each other, and for similar descriptions, reference may be made to the method embodiments. Specifically, the network device 600 shown in FIG. 6 may correspond to the corresponding entity in the method 400 of the embodiment of the present disclosure, and the above and other operations and/or functions of the respective units in the network device 600 are provided for implementing the corresponding processes of the respective methods in FIG. 4, and for the sake of brevity, details thereof will be omitted here.

The communication device according to the embodiment of the present disclosure has been described above from the perspective of functional modules with reference to the accompanying drawings. It should be understood that the functional modules can be implemented in the form of hardware, software instructions, or a combination of hardware and software modules. Specifically, the steps of the method embodiments in the embodiments of the present disclosure may be implemented by hardware integrated logic circuits in the processor and/or software instructions, and the steps of the methods disclosed in conjunction with the embodiments of the present disclosure may be directly embodied as implemented by a hardware decoding processor or a combination of hardware and software modules in a decoding processor. Optionally, the software modules may be located in a random access memory, a flash memory, a read-only memory, a programmable read-only memory, an electrically erasable programmable memory, a register, and other storage media known in the art. The storage medium is located in the memory, and the processor reads the information in the memory, and performs the steps in the above method embodiments in combination with its hardware.

For example, the processing unit 510 as described above may be implemented by a processor, and the reporting unit 520 and the receiving unit 610 may be implemented by a transceiver.

FIG. 7 is a schematic diagram showing a structure of a communication device 700 according to an embodiment of the present disclosure.

As shown in FIG. 7, the communication device 700 includes a processor 710.

Here, the processor 710 can invoke and execute a computer program from a memory to implement the method in the embodiment of the present disclosure.

As shown in FIG. 7, the communication device 700 may further include a memory 720.

Here, the memory 720 may store indication information, and may further store codes, instructions, etc. to be executed by the processor 710. The processor 710 can invoke and execute a computer program from the memory 720 to implement the method in the embodiment of the present disclosure. The memory 720 may be a separate device independent from the processor 710, or may be integrated in the processor 710.

As shown in FIG. 7, the communication device 700 may further include a transceiver 730.

Here, the processor 710 may control the transceiver 730 to communicate with other devices, and in particular, transmit information or data to other devices, or receive information or data transmitted by other devices. The transceiver 730 may include a transmitter and a receiver. The transceiver 730 may further include one or more antennas.

It can be appreciated that the components in the communication device 700 may be connected via a bus system. Here, the bus system may include a power bus, a control bus and a status signal bus, in addition to a data bus.

It can be appreciated that the communication device 700 may be the terminal device according to the embodiment of the present disclosure, and the communication device 700 may implement the corresponding processes implemented by the terminal device in any of the methods according to the embodiments of the present disclosure. That is, the communication device 700 in the embodiment of the present disclosure may correspond to the terminal device 500 in the embodiment of the present disclosure, and may correspond to the corresponding entity that performs the method 400 according to the embodiment of the present disclosure. For the sake of brevity, details thereof will be omitted here. Similarly, the communication device 700 may be the network device according to the embodiment of the present disclosure, and the communication device 700 may implement the corresponding processes implemented by the network device in any of the methods according to the embodiments of the present disclosure. That is, the communication device 700 in the embodiment of the present disclosure may correspond to the network device 600 in the embodiment of the present disclosure, and may correspond to the corresponding entity that performs the method 400 according to the embodiment of the present disclosure. For the sake of brevity, details thereof will be omitted here.

In addition, an embodiment of the present disclosure also provides a chip.

For example, the chip may be an integrated circuit chip, which has a signal processing capability, and can implement or perform any of the methods, steps, and logic block diagrams disclosed in the embodiments of the present disclosure. The chip may also be referred to as a system level chip, a system chip, a chip system, a system-on-a-chip, or the like. Optionally, the chip can be applied in various communication devices, such that the communication device installed with the chip can perform the methods, steps and logic block diagrams disclosed in the embodiments of the present disclosure.

FIG. 8 is a schematic diagram showing a structure of a chip 800 according to an embodiment of the present disclosure.

As shown in FIG. 8, the chip 800 includes a processor 810.

Here, the processor 810 can invoke and execute a computer program from a memory to implement the method in the embodiment of the present disclosure.

As shown in FIG. 8, the chip 800 may further include a memory 820.

Here, the processor 810 can invoke and execute a computer program from the memory 820 to implement the method in the embodiment of the present disclosure. The memory 820 may store indication information, and may further store codes, instructions, etc. to be executed by the processor 810. The memory 820 may be a separate device independent from the processor 810, or may be integrated in the processor 810.

As shown in FIG. 8, the chip 800 may further include an input interface 830.

Here, the processor 810 can control the input interface 830 to communicate with other devices or chips, and in particular, obtain information or data transmitted by other devices or chips.

As shown in FIG. 8, the chip 800 may further include an output interface 840.

Here, the processor 810 can control the output interface 840 to communicate with other devices or chips, and in particular, output information or data to other devices or chips.

It can be appreciated that the chip 800 may be applied in the network device according to the embodiment of the present disclosure, and the chip 800 may implement the corresponding processes implemented by the network device in any of the methods according to the embodiments of the present disclosure, or the corresponding processes implemented by the terminal device in any of the methods according to the embodiments of the present disclosure. For the sake of brevity, details thereof will be omitted here.

It can be appreciated that the components in the chip 800 may be connected via a bus system. Here, the bus system may include a power bus, a control bus and a status signal bus, in addition to a data bus.

The above processor may include, but not limited to, a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component.

The methods, steps, and logical block diagrams disclosed in the embodiments of the present disclosure can be implemented or performed by the processor. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, erasable programmable memory, or register. The storage medium can be located in the memory, and the processor can read information from the memory and perform the steps of the above methods in combination with its hardware.

The above memory may include, but not limited to, a volatile memory and/or a non-volatile memory. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM)), and Direct Rambus RAM (DR RAM).

It is to be noted that the memory used for the system and method described in the present disclosure is intended to include these and any other suitable types of memories.

An embodiment of the present disclosure also provides a computer readable storage medium for storing a computer program. The computer readable storage medium stores one or more programs including instructions which, when executed by a portable electronic device including a plurality of application programs, cause the portable electronic device to perform the method 400 according to the method embodiments. Optionally, the computer readable storage medium can be applied in the network device in the embodiment of the present disclosure, and the computer program can cause a computer to perform corresponding processes implemented by the network device in the method according to any of the embodiments of the present disclosure. Details thereof will be omitted here for simplicity. Optionally, the computer readable storage medium can be applied in the mobile terminal/terminal device in the embodiment of the present disclosure, and the computer program can cause a computer to perform corresponding processes implemented by the mobile terminal/terminal device in the method according to any of the embodiments of the present disclosure. Details thereof will be omitted here for simplicity.

An embodiment of the present disclosure also provides a computer program product including a computer program. Optionally, the computer program product can be applied in the network device in the embodiment of the present disclosure, and the computer program can cause a computer to perform corresponding processes implemented by the network device in the method according to any of the embodiments of the present disclosure. Details thereof will be omitted here for simplicity. Optionally, the computer program product can be applied in the mobile terminal/terminal device in the embodiment of the present disclosure, and the computer program can cause a computer to perform corresponding processes implemented by the mobile terminal/terminal device in the method according to any of the embodiments of the present disclosure. Details thereof will be omitted here for simplicity.

An embodiment of the present disclosure also provides a computer program which, when executed by a computer, causes the computer to perform the method 400 according to the method embodiments. Optionally, the computer program can be applied in the network device in the embodiment of the present disclosure. The computer program, when executed on a computer, can cause the computer to perform corresponding processes implemented by the network device in the method according to any of the embodiments of the present disclosure. Details thereof will be omitted here for simplicity. Optionally, the computer program can be applied in the mobile terminal/terminal device in the embodiment of the present disclosure. The computer program, when executed on a computer, can cause the computer to perform corresponding processes implemented by the mobile terminal/terminal device in the method according to any of the embodiments of the present disclosure. Details thereof will be omitted here for simplicity.

An embodiment of the present disclosure further provides a communication system, which may include the above terminal device and network device to form the communication system 100 as shown in FIG. 1. Details thereof will be omitted here for simplicity. It should be noted that the term "system" and the like as used herein may also be referred to as "network management architecture" or "network system" or the like.

It should also be understood that the terms used in the embodiments of the present disclosure and the claims as attached are only for the purpose of describing specific embodiments, and are not intended to limit the embodiments of the present disclosure. For example, as used in the embodiments of the present disclosure and the claims as attached, the singular forms "a," "the," "above," and "said" are intended to include the plural forms as well, unless the context clearly indicates otherwise.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of the embodiments of the present disclosure. When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

Those skilled in the art can clearly understand that, for the convenience and conciseness of the description, for the specific operation processes of the systems, devices, and units described above, reference can be made to the corresponding processes in the foregoing method embodiments, and details thereof will be omitted here. In the embodiments of the present disclosure, it can be appreciated that the disclosed systems, devices, and methods may be implemented in other ways. For example, the divisions of the units or modules or components in the device embodiments as described above are only divisions based on logical functions, and there may be other divisions in actual implementations. For example, more than one unit or module or component may be combined or integrated into another system, or some units or modules or components can be ignored or omitted. In another example, the units/modules/components described above as separate/explicit components may or may not be physically separated, that is, they may be co-located or distributed across a number of network elements. Some or all of the units/modules/components may be selected according to actual needs to achieve the objects of the embodiments of the present disclosure. Finally, it is to be noted that the mutual coupling or direct coupling or communicative connection as shown or discussed above may be indirect coupling or communicative connection between devices or units via some interfaces which may be electrical, mechanical, or in any other forms.

While the specific embodiments of the present disclosure have been described above, the scope of the embodiments of the present disclosure is not limited to these embodiments. Various variants and alternatives can be made by those skilled in the art without departing from the scope of the embodiments of the present disclosure. These variants and alternatives are to be encompassed by the scope of the embodiments of present disclosure as defined by the claims as attached.

## Claims

1. An SDT failure reporting method, comprising:
determining whether a Small Data Transmission (SDT) failure occurs; and
reporting SDT failure information when the SDT failure occurs.

2. The method according to claim 1, wherein said determining whether the SDT failure occurs comprises:
determining the SDT failure when an SDT failure condition is satisfied.

3. The method according to claim 2, wherein the SDT failure condition comprises at least one of:
expiry of a first timer that is started when an SDT process starts and/or is triggered;
Random Access (RA) failure;
Configured Grant (CG) resource being unavailable;
Radio Link Control (RLC) failure;
Radio Link Failure (RLF);
cell reselection; or
Radio Resource Control Reject (RRCReject) or Radio Resource Control Setup (RRCSetup) message being received.

4. The method according to any one of claims 1 to 3, wherein the SDT failure information comprises at least one of:
an SDT failure type; or
a failure cause.

5. The method according to claim 4, wherein the SDT failure type comprises at least one of:
SDT failure;
Configured Grant Small Data Transmission (CG-SDT) failure; or
Random Access Small Data Transmission (RA-SDT) failure.

6. The method according to claim 4, wherein the failure cause comprises at least one of:
expiry of a first timer that is started when an SDT process starts and/or is triggered;
Random Access (RA) failure;
Configured Grant (CG) resource being unavailable;
Radio Link Control (RLC) failure;
beam recovery failure;
cell reselection; or
Radio Resource Control Reject (RRCReject) or Radio Resource Control Setup (RRCSetup) message being received.

7. The method according to any one of claims 1 to 6, wherein said reporting the SDT failure information comprises:
reporting the SDT failure information via an RLF report; or
reporting the SDT failure information via dedicated information.

8. The method according to any one of claims 1 to 7, wherein said reporting the SDT failure information comprises:
reporting the SDT failure information to a first serving cell, the first serving cell comprising at least one of: a cell accessed using a non-SDT random access process, a cell successfully accessed using an RRC connection reestablishment process, or a cell successfully accessed when a terminal device re-enters an RRC connected state.

9. The method according to claim 8, further comprising:
storing the SDT failure information.

10. The method according to claim 8, wherein the first serving cell is a first cell configured with an SDT resource and having an SDT failure occurring therein; or the first serving cell is a second cell other than the first cell.

11. The method according to claim 10, wherein the SDT failure information further comprises an identity of the first cell.

12. The method according to any one of claims 1 to 11, further comprising:
reporting first indication information indicating that there is SDT failure information to be reported.

13. The method according to any one of claims 1 to 12, further comprising:
receiving second indication information instructing a terminal device to report or not to report the SDT failure information.

14. The method according to any one of claims 1 to 13, further comprising:
receiving uplink data from a higher layer; and
transmitting the uplink data over a random access resource and/or a Configured Grant (CG) resource.

15. The method according to claim 14, wherein when it is determined to transmit the uplink data over the CG resource, at least one of the following conditions is satisfied:
a data amount of the uplink data being smaller than or equal to an SDT threshold;
a change amount of signal quality of a serving cell being smaller than or equal to a quality threshold;
a CG resource being available on a selected carrier;
a CG resource being available on a selected beam; or
a Timing Advance (TA) timer being running.

16. A SDT failure reporting method, comprising:
receiving Small Data Transmission (SDT) failure information reported by a terminal device.

17. The method according to claim 16, wherein the SDT failure information comprises at least one of:
an SDT failure type; or
a failure cause.

18. The method according to claim 17, wherein the SDT failure type comprises at least one of:
SDT failure;
Configured Grant Small Data Transmission (CG-SDT) failure; or
Random Access Small Data Transmission (RA-SDT) failure.

19. The method according to claim 17, wherein the failure cause comprises at least one of:
expiry of a first timer that is started when an SDT process starts and/or is triggered;
Random Access (RA) failure;
Configured Grant (CG) resource being unavailable;
Radio Link Control (RLC) failure;
beam recovery failure;
cell reselection; or
Radio Resource Control Reject (RRCReject) or Radio Resource Control Setup (RRCSetup) message being received.

20. The method according to any one of claims 16 to 19, wherein said receiving the SDT failure information reported by the terminal device comprises:
receiving the SDT failure information reported by the terminal device via an RLF report; or
receiving the SDT failure information reported by the terminal device via dedicated information.

21. The method according to any one of claims 16 to 20, wherein the method is applied in a first serving cell, the first serving cell comprising at least one of: a cell accessed using a non-SDT random access process, a cell successfully accessed using an RRC connection reestablishment process, or a cell successfully accessed when the terminal device re-enters an RRC connected state.

22. The method according to claim 21, wherein the first serving cell is a first cell configured with an SDT resource and having an SDT failure occurring therein; or the first serving cell is a second cell other than the first cell.

23. The method according to claim 22, wherein the method is applied in a second cell, and the method further comprises:
forwarding the SDT failure information reported by the terminal device to the first cell.

24. The method according to claim 22, wherein the SDT failure information further comprises an identity of the first cell.

25. The method according to any one of claims 16 to 24, further comprising:
receiving first indication information reported by the terminal device, the first indication information indicating that there is SDT failure information to be reported.

26. The method according to any one of claims 16 to 25, further comprising:
transmitting second indication information to the terminal device, the second indication information instructing the terminal device to report or not to report the SDT failure information.

27. The method according to any one of claims 16 to 26, further comprising:
receiving uplink data transmitted by the terminal device over a random access resource and/or a Configured Grant (CG) resource.

28. A terminal device, comprising:
a processing unit configured to determine whether a Small Data Transmission (SDT) failure occurs; and
a reporting unit configured to report SDT failure information when the SDT failure occurs.

29. A network device, comprising:
a receiving unit is configured to receive Small Data Transmission (SDT) failure information reported by a terminal device.

30. A terminal device, comprising a processor and a memory, wherein the memory has a computer program stored thereon, and the processor is configured to invoke and execute the computer program stored in the memory to perform the method according to any of claims 1 to 15.

31. A network device, comprising a processor and a memory, wherein the memory has a computer program stored thereon, and the processor is configured to invoke and execute the computer program stored in the memory to perform the method according to any of claims 16 to 27.

32. A chip, comprising a processor configured to invoke and execute a computer program from a memory, to cause a device installed with the chip to perform the method according to any of claims 1 to 15 or any of claims 16 to 27.

33. A computer-readable storage medium, storing a computer program that causes a computer to perform the method according to any of claims 1 to 15 or any of claims 16 to 27.

34. A computer program product, comprising computer program instructions that cause a computer to perform the method according to any of claims 1 to 15 or any of claims 16 to 27.

35. A computer program, causing a computer to perform the method according to any of claims 1 to 15 or any of claims 16 to 27.
